# EUROPÄISCHE PATENTSCHRIFT

(11) **EP 1 217 134 B1**
(45) Veröffentlichungstag und Bekanntmachung des Hinweises auf die Patenterteilung: **13.07.2005**
(21) Anmeldenummer: 01127786.0
(22) Anmeldetag: 22.11.2001
(51) Int. Cl.: E03C 1/10, E03C 1/084, F16K 24/02

(54) **Belüftungs- und Rückschlagventil**
Venting and one-way valve
Soupape d'aération et d'anti-retour

(30) Priorität: 20.12.2000 IT BS000130
(43) Veröffentlichungstag der Anmeldung: 26.06.2002
(73) Patentinhaber: Antonio Rossi, 25065 Lumezzane (BS) (IT)
(72) Erfinder: Rossi, Antonio Attilio, 25065 Lummezzana (Brescia) (IT)
(74) Vertreter: Dreiss, Fuhlendorf, Steimle & Becker

(56) Entgegenhaltungen:
- DE-A- 19 754 566
- DE-U- 9 407 230

## Beschreibung

Die vorliegende Erfindung betrifft einen sog. Rohrbelüfter, der in Verbindung mit sanitären Armaturen verwendet wird. Eine Armatur ist bspw. an eine Trinkwasserinstallation/-versorgung angeschlossen und gibt durch Betätigung eines Absperrventils der Armatur Trinkwasser ab. An die Armatur ist ein Verbraucher angeschlossen. Der Rohrbelüfter wird zwischen der Armatur und dem Verbraucher installiert, also in Rücksaugrichtung vor dem Absperrventil der Armatur. Aufgabe von Rohrbelüftern ist es, im Falle eines Unterdrucks in der Trinkwasserinstallation/ -versorgung und gleichzeitig geöffnetem Absperrventil der Armatur die Rücksaugen von verunreinigtem Wasser in die Trinkwasserinstallation/ -versorgung zu verhindern. Dies erfolgt bei Rohrbelüftern durch die zwangsweise Ansaugung atmosphärischer Luft und der damit verbundenen Unterbrechung des anstehenden Unterdrucks zwischen Schmutzwasser und Rohrbelüfter.

Genauer gesagt, betrifft die vorliegende Erfindung Belüftungs- und Rückschlagventile, die, wenn sie an einem Wasserhahn angebracht sind, der an eine Wasser verwendende Maschine, wie beispielsweise eine Waschmaschine oder ähnliches, angeschlossen ist, die Aufgabe besitzen, den Abzug der Luft zu ermöglichen und einen Rückfluß des Wassers ins Netz zu verhindern.

Es sind bereits verschiedene Realisierungen von Belüftungsventilen bekannt, die im wesentlichen einen Ventilkörper mit verschiedenen Durchgängen und ein schwimmendes Verschlußstück, im allgemeinen als Ventilkegel bezeichnet, das in den Ventilkörper eingesetzt und zwischen einer Verschlußposition und einer Öffnungsposition beweglich ist, umfaßt.

Ein innovatives Beispiel eines Belüftungsventils setzt sich zusammen aus einem äußeren Messingkörper und aus einem Einsatz aus Kunststoff, wie beispielsweise einem Acetalharz oder ähnlichem, der in den äußeren Körper eingesetzt ist.

Zwischen dem inneren Einsatz und äußeren Körper sind Durchgänge für das Wasser ausgebildet. Ein Rand an der oberen Stirnfläche des Einsatzes bildet einen Ventilsitz für einen Luftabzugs-Ventilkegel. DE-U-9407230 offenbart ein Belüftungs- und Rückschlagventil gemäß dem Oberbegriff des Anspruchs 1.

Ein derartiges Belüftungs- und Rückschlagventil hat im Laufe der Zeit einige Detailänderungen erfahren, um zumindest dessen Aufbau zu vereinfachen und auf eine oder mehrere Dichtungen verzichten zu können. Dennoch unterliegt das Belüftungsventil noch Dichtigkeitsproblemen und anderen Nachteilen, deren Hauptursachen die folgenden sind:
- Vorhandensein von Höckern bzw. Graten auf den Verbindungsebenen des Stempels des Kunststoffeinsatzes;
- Lunkerbildung bzw. Gußlöcher am Boden des Schachts;
- Schrammen auf der Außenfläche des Flansches des Dichtkopfes des Ventilkegels auf Grund von Problemen mit den Bewegungen während der Vormontagevorgänge;
- Montagefehler der torischen Dichtungen, wie beispielsweise Verschlingungen und Montage zweier Dichtungen in demselben Sitz;
- Freilegung und Einschnitte der Dichtungen während der Vormontage des in dem Messingkörper abgedichteten Einsatzes;
- Vorhandensein von Messinggraten bzw. Höckern, die sich von den radialen Schlitzen des Messingkörpers gelöst haben und sich auf die Dichtungen legen und diese einschneiden;
- Mikrogewindeeinbeulungen des Messingkörpers auf Grund der zahlreichen Bewegungen während der Vormontage;
- Montagefehler der Flachdichtung des Ventilkegels;
- Vorhandensein von Graten bzw. Höckern in Höhe der Ebene der Verbindung der Stempel des Kunststoffeinsatzes;
- Oberflächendefekte auf der Silikongummiflachdichtung des Ventilkegels; und
- Bruch des Kopfflansches des Ventilkegels auf Grund von Rückschlägen bzw. Rückstößen.

Die vorliegende Erfindung wurde gemacht, um zumindest die Einflüsse von solchen Problemen zu reduzieren, die noch mit den Belüftungsventilen verknüpft sind, und um den neuesten Vorgaben und Normen auf diesem Gebiet zu entsprechen, die unter anderem wohldefinierte Querschnitte für den Durchgang des Fluids im Inneren des Ventils festlegen.

Mit der vorliegenden Erfindung soll außerdem ein Belüftungs- und Rückschlagventil vorgeschlagen und geschaffen werden, das in neuer und origineller Weise aufgebaut ist, damit der äußere Körper und der Einsatz Durchgänge mit einem Querschnitt gemäß den Normen bilden und der Luftabzugs-Ventilkegel in dem Einsatz in anderer Weise geführt wird, um die Realisierung derartiger Durchgänge zu ermöglichen.

Belüftungs- und Rückschlagventile der aus dem Stand der Technik bekannten Art können in der Regel eine Ansaugung von Schmutzwasser nicht gänzlich verhindern. Über gültige technische Normen und Regeln ist eine maximal zulässige Ansaughöhe von Schmutzwasser und ein Mindestspalt der Luftansaugkanäle festgelegt. Zur Prüfung der Ansaughöhe wird an dem Belüftungs- und Rückschlagventil austrittsseitig ein Prüfrohr (z. B. aus transparentem Kunststoff) mit definierter Querschnittsfläche in senkrechter Lage angeschlossen und in ein Wasserbad eingetaucht. Anschließend wird auf der Einstrittseite des Belüftungs- und Rückschlagventils ein definierter Unterdruck erzeugt und die Ansaughöhe des Wassers in dem Prüfrohr gemessen. Die Leistungsfähigkeit eines Rohrbelüfters wird durch die maximale Ansaughöhe des Schmutzwassers bestimmt. Je geringer die Ansaughöhe ausfällt, um so besser ist das Belüftungs- und Rückschlagventil in seiner Schutzwirkung geeignet. Es besteht ein unmittelbarer Zusammenhang zwischen der Ansaughöhe und der Querschnittsfläche der Luftansaugöffnung.

Wie eingangs bereits erwähnt, werden die Rohrbelüfter üblicherweise an sanitäre Armaturen angeschlossen. Die Anschlußmaße dieser Armaturen sind standardisiert und lassen somit Anschlußmaße und Geometrie der Rohrbelüfter. Insbesondere ist die Ausbildung ausreichend großer Luftansaugöffnungen und die Einhaltung der normenseitig festgelegten Mindestspaltmaße problematisch.

Der vorliegenden Erfindung liegt deshalb insbesondere die Aufgabe zugrunde, durch eine geeignete Konstruktion eines Belüftungs- und Rückschlageventils sicherzustellen, dass innerhalb vorgegebener Abmessungen und Geometrien des Belüftungs- und Rückschlageventils eine möglichst geringe Ansaughöhe realisiert wird.

Das Belüftungs- und Rückschlagventil gemäß der Erfindung ist im wesentlichen gemäß Anspruch 1 ausgebildet und weist darüber hinaus den Vorteil auf, eine Begrenzung der Herstellungskosten zu ermöglichen.

Mit der vorliegenden Erfindung wird bei vorgegebenen Querschnittsflächen der Radialöffnungen in dem inneren Einsatz und der radialen Schlitze in dem äußeren Körper stets ein maximaler Durchfluss ermöglicht, indem der Einsatz nur so in den Körper eingesetzt werden kann, dass die Radialöffnungen mit den radialen Schlitzen fluchten. Dadurch kann eine besonders niedrige Ansaughöhe und eine hohe Wirksamkeit des Belüftungs- und Rückschlagventils erzielt werden.

Mehr Details der Erfindung gehen aus der folgenden Beschreibung unter Bezug auf die beigefügten Zeichnungen hervor, die erläuternd und nicht begrenzend zu verstehen sind:
- Fig. 1: zeigt in axialem Teilschnitt ein Belüftungs- und Rückschlagventil in einer ersten Ausführungs- und Montageform;
- Fig. 2: zeigt eine Draufsicht eines Kopfes des Ventils aus Fig. 1;
- Fig. 3: zeigt einen analogen Querschnitt des Belüftungsund Rückschlagventils in einer zweiten Ausführungs- und Montageform;
- Fig. 4: zeigt eine Draufsicht eines Kopfes des Ventils aus Fig. 2;
- Fig. 5 und 6: zeigen zwei Teilquerschnitte in um 90° axial gedrehten Ebenen lediglich eines äußeren Körpers der Ventile aus Fig. 1 und 3;
- Fig. 7 und 8: zeigen zwei Teilquerschnitte in um 90° axial gedrehten Ebenen lediglich eines Einsatzes des Ventils aus Fig. 1;
- Fig. 9: zeigt eine Ansicht eines Ventilkegels des Ventils aus Fig. 1;
- Fig. 10 und 11: zeigen zwei Teilquerschnitte analog zu jenen der Fig. 7 und 8, jedoch für einen Einsatz des Ventils aus Fig. 2;
- Fig. 12: zeigt eine Ansicht eines Ventilkegels des Ventils aus Fig. 2; und
- Fig. 13: zeigt eine Ansicht eines Ventilkegels in einer konstruktiven Variante.

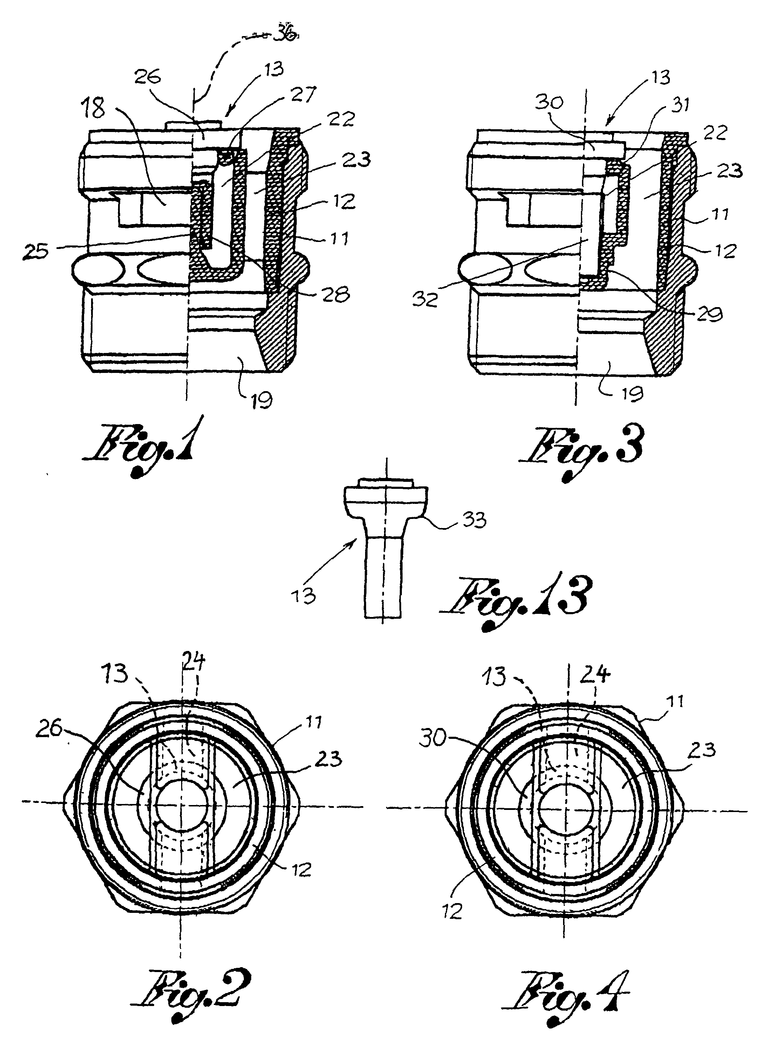

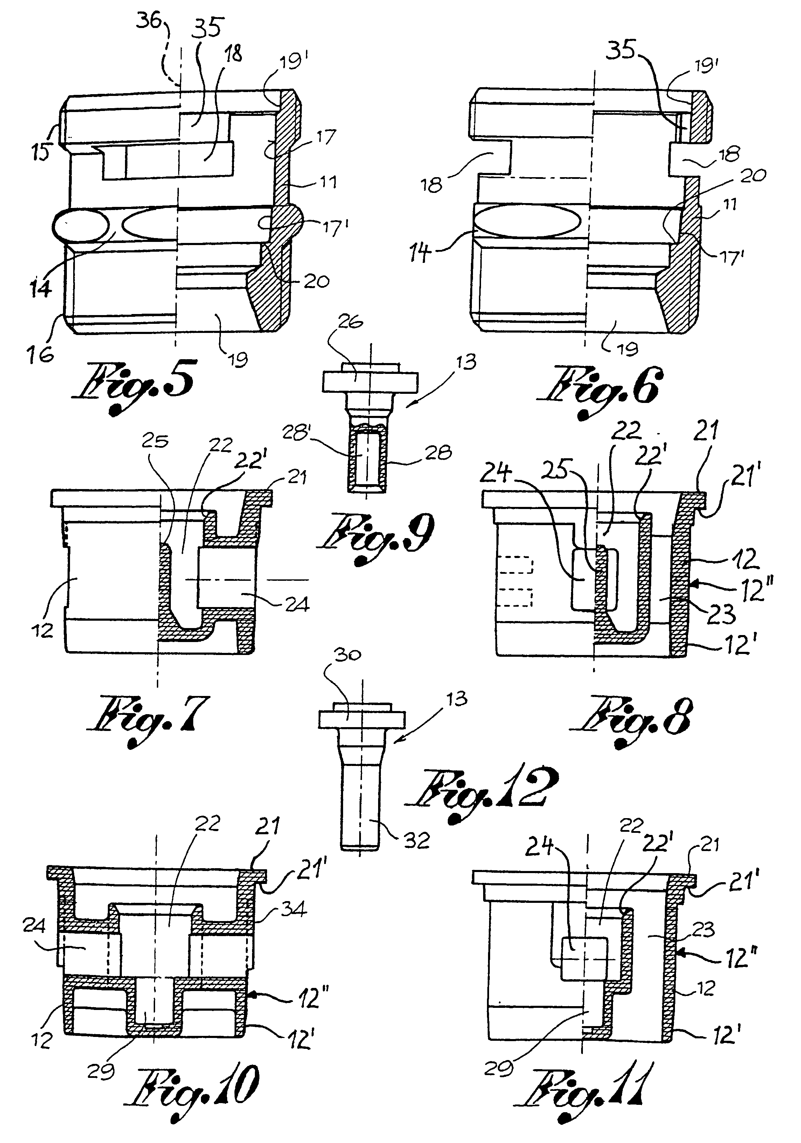

In den beiden Ausführungen der Fig. 1 und 3 umfaßt ein erfindungsgemäßes Belüftungs- und Rückschlagventil im wesentlichen einen metallischen äußeren Körper 11, gewöhnlicherweise aus Messing, einen buchsenförmigen Einsatz 12 aus einem Kunststoffmaterial, wie beispielsweise ein Metallharz, der in den Körper 11 eingesetzt ist, und einen Ventilkegel 13, der in dem Einsatz 12 geführt und axial beweglich ist. Die zwei Ausführungen unterscheiden sich hauptsächlich durch eine unterschiedliche Art der Verbindung zwischen dem Ventilkörper 11 und dem Einsatz 12, wie später beschrieben wird.

Sowohl bei der einen als auch der anderen Ausführungsform weist der Körper 11 außen, auf einer Seite einer sechseckigen Zwischenzone 14 ein Gewinde 15, das in die Öffnung eines - nicht dargestellten - Wasserhahns einschraubbar ist, und auf der entgegengesetzten Seite der Zwischenzone 14 eine mit einem Gewinde versehene Zone 16 auf, an der ein Schlauch- bzw. Gummihalter oder direkt ein Zuleitungsrohr zum Anschluß eines Verbrauchers für das zu verwendende Wasser angeschraubt werden kann. Innen in dem Ventilkörper 11 ist ein Aufnahmesitz 17, auf dessen Höhe radiale Schlitze 18 ausgespart sind, und eine Wasseraustrittsöffnung 19 axial zu dem Aufnahmesitz 17 ausgebildet. Am Eingang des Aufnahmesitzes 17 ist eine Ringstufe 19' vorgesehen, und am Ende des Aufnahmesitzes 17 eine ringförmige Anschlagfläche 20. Zumindest ein Teil 17' der Seitenfläche des Aufnahmesitzes 17 ist in der Nahe des Anschlagfläche 20 konisch ausgebildet. Ein Teil 12' der äußeren Umfangsfläche 12'' des Einsatzes 12 ist konisch ausgebildet und tritt mit der entsprechenden konischen Fläche 17' des Aufnahmesitzes 17 des äußeren Körpers 11 abdichtend in Eingriff.

Der innere Einsatz 12 ist in dem Aufnahmesitz 17 des äußeren Körpers 11 festgelegt, wobei er aufgrund der konischen Fläche 17' eingepreßt ist. Der Einsatz 12 weist an seinem oberen Ende einen radial nach außen auskragenden Flansch 21 mit einer unteren Dichtfläche 21' auf, der in die Stufe des Eingangs des Aufnahmesitzes 17 angepaßt ist. Die Dichtfläche 21' liegt bei in den Körper 11 eingesetztem Einsatz 12 auf dem oberen Rand im Bereich der Stirnfläche des Körpers 11 abdichtend auf. Die Verbindung zwischen dem Körper 11 und dem Einsatz 12 und somit auch zwischen dem Flansch 21 und der Austrittsöffnung 19 des Aufnahmesitzes 17 mittels Preßsitz tragen zur Dichtigkeit zwischen den zwei zusammengebauten Komponenten 11, 12 bei, ohne den Einsatz von Dichtungen.

In seiner Mitte begrenzt der Einsatz 12 einen Schacht 22, der nach unten zu seinem Boden hin geschlossen und zum Eingang des Aufnahmesitzes 17 hin offen ist. Der Schacht 22 steht mit in dem Einsatz 12 ausgebildeten longitudinalen Durchgängen 23 in Verbindung, die parallel zur Längsachseachse des Körpers 11 verlaufen. Diese Durchgänge 23 sind dazu bestimmt, die Austrittsöffnung des Wasserhahns mit der Öffnung 19 für den Austritt des Wassers zu dessen Verwendung in dem Verbraucher zu verbinden.

Des weiteren weist der Einsatz 12 in Höhe der radialen Schlitze 18 des Körpers 11 Radialöffnungen 24 auf, durch die der mittige Schacht 22 über die radialen Schlitze 18 mit dem Äußeren des Ventilkörpers 11 verbunden ist.

In der Ausführungsform aus Fig. 1 weist der Einsatz 12, der den Fig. 7 und 8 entspricht, einen Führungsschaft 25 auf, der sich vom Boden des mittigen Schachts 22 aus nach oben erstreckt. Der Ventilkegel 13 weist einen Kopf 26 mit einer Dichtung 27 und eine Stange 28 mit einer axialen Führungsöffnung 28' gemäß der Darstellung in Fig. 9 auf. Mittels dieser Öffnung 28' ist der Ventilkegel 13 mit dem Führungsschaft 25 verbunden und kann in axialer Richtung längs des Führungsschaftes 25 gleiten. Der Ventilkegel 13 kann so ausgehend von einer abgesenkten Verschlußposition, in der der Kopf 26 des Ventilkegels 13 mit der jeweiligen Dichtung 27 auf den vorzugsweise angesenkten Rand 22' des Schachts 22 ruht.

Bei der Ausführung aus Fig. 3 weist der Einsatz 12, der den Fig. 10 und 11 entspricht, statt des Führungsschaftes 25 eine Vertiefung 29 am Boden des mittigen Schachts 22 auf. Der Ventilkegel 13 weist ebenfalls einen Kopf 30 mit einer Dichtung 31 auf, umfaßt jedoch eine Stange 32 (vlg. Fig. 12), die in der Vertiefung 29 aufgenommen wird und in ihr entlang der Längsachse des Körpers 11 gleiten kann. Dadurch wird eine axiale Bewegung des Ventilkegels 13 ermöglicht, ausgehend von der abgesenkten Verschlußposition, in welcher der Kopf 30 mit der Dichtung 31 auf dem vorzugsweise angesenkten Rand 22' des Schachts 22 ruht.

Es ist festzuhalten, dass der Ventilkegel 13 bei der einen oder anderen Ausführung auch ohne Dichtung 27, 31 vorgesehen sein könnte, wobei es einstückig mit einem Kopfteil 33 ausgebildet sein kann, der dazu bestimmt ist, abdichtend auf dem Rand 22' des Schachtes 22 des Einsatzes 12 aufzuliegen (vgl. Fig. 13).

In jedem Fall ist der Ventilkegel 13 so dimensioniert bzw. die Stange 28 oder 32 des Ventilkegels 13 so lang ausgebildet, dass sich die Stange 28 oder 32 bei einem anliegenden Wasserdruck, der einen vorgebbaren Grenzwert übersteigt, auf dem Boden des Schachts 22 abstützt. Die aufgrund des anliegenden Drucks auf den Ventilkegel 13 in der Verschlußposition wirkenden Kräfte werden über die Stange 28 oder 32 in den Boden des Schachts 22 geleitet. Dadurch belasten sie nicht den Dichtsitz zwischen dem Kopf 26 oder 30 bzw. dem Kopfteil 33 einerseits und dem Rand 22' des Schachts 22 andererseits. Ein Festkleben des Kopfes 26 oder 30 bzw. des Kopfteils 33 des Ventilkegels 13 auf dem Rand 22' des Schachts 22 in der Verschlußposition wird also vermieden. Außerdem werden eventuelle Rückschläge auf den Kopf 26 oder 30 bzw. den Kopfteil 33 über die Stange 28 oder 32 des Ventilkegels 13 auf den Einsatz 12 übertragen.

Normalerweise befindet sich der Ventilkegel 13 in der Verschlußposition (in den Figuren unten) und liegt mit der jeweiligen Dichtung 27 oder 31 bzw. mit dem Kopfteil 33 abdichtend auf dem Rand 22' des Schachts 22 auf. Im Falle eines Rückflusses (aufgrund eines Druckabfalls in der Trinkwasserinstallation/ -versorgung) wird der Ventilkegel 13 nach oben verschoben, um den Durchtritt von Wasser aus dem Wasserhahn in die Trinkwasserinstallation/ -versorgung zu verhindern.

Wenn der Wasserhahn offen ist, verschiebt der Druck des gelieferten Wassers den Ventilkegel 13 und hält ihn in der Verschlußposition in Auflage auf und in Abdichtung mit dem Rand 22' des Schachts 22, wodurch der Schacht 22 verschlossen wird. Dann fließt das Wasser regelmäßig durch die longitudinalen Durchgänge 23 zum Verbraucher.

Wenn im Gegensatz dazu aus irgendeinem Grund oder Anlaß der Druck des Wassers in Strömungsrichtung nach dem Ventil höher wird als vor dem Ventil, wodurch das Wasser veranlasst wird, von dem Verbraucher zurück zum Wasserhahn zu fließen, verschiebt sich der Ventilkegel 13 (in den Figuren nach oben) in die Öffnungsposition. Dann verhindert der Ventilkegel 13 den Rückfluß des Wassers zum Wasserhahn und damit zum Versorgungsnetz und öffnet den Schacht 22, wodurch es dem zurückkehrenden Wasser ermöglicht wird, durch die Radialöffnungen 24 und die seitlichen Schlitze 18 zu laufen und sich aus dem Ventil heraus zu entladen.

Die nachfolgenden Leitlinien haben zur Erfindung geführt und können wie folgt zusammengefaßt werden:
- Eliminierung der torischen Dichtungen, die bei der Realisierung der Abdichtung zwischen Oberflächen des Einsatzes aus Kunststoff, dem Körper des Wasserhahns und dem Körper des Ventilkegels gewöhnlich verwendet wurden, ohne Einsatz anderer Dichtelemente;
- Reduzierung des Außendurchmessers des Körpers des Ventils;
- Ersatz der flachen Silikongummidichtungen durch torische Dichtungen aus dem gleichen Material;
- Mitberücksichtigung des Kunststoffeinsatzes bei der Widerstandsfähigkeit gegen Rückschläge.

Durch die Eliminierung der torischen Dichtungen 27, 31 durch den Preßsitz zwischen dem Körper 11 und dem Einsatz 12 können gleichzeitig viele der oben beschriebenen Probleme gelöst und kann zugleich eine beträchtliche Reduzierung der Kosten zu realisiert werden.

In der Tat wird es durch die Eliminierung derartiger Dichtungen 27, 31 ermöglicht, einen Einsatz 12 zu realisieren, der frei von Hinterschneidungen und somit aus einem Formwerkzeug mit Gesamtabdruck axial entnehmbar ist. Bei der Herstellung des Einsatzes 12 befinden sich Verschlußflachen bzw. -ebenen des Formwerkzeugs (von denen unweigerlich die Bildung auch leichtester Höcker bzw. Grate stammt) in Positionen, die keinen Einfluss auf die Dichtigkeit des Belüftungs- und Rückschlagventils haben.

Außerdem wird es durch die Eliminierung der Dichtungen 27, 31 möglich, die Phase der Vormontage zu vermeiden, der im allgemeinen einige Defekte zugeschrieben werden müssen.

Dank dieser Modifikation kann eine Reduzierung des Außendurchmessers des Ventilkörpers 11 realisiert werden.

Das Ersetzen der flachen Silikongummidichtungen durch torische Dichtungen 27, 31 oder durch mit dem Kopf 26, 30 des Ventilkegels 13 einstückige Dichtungen (Kopfteil 33) ist vorwiegend durch die Notwendigkeit bedingt, die Spezifikationen der Norm bezüglich der Innenteile des Belüftungs- und Rückschlagventils zu erfüllen.

An diesem Punkt sei ein typisches Erfordernis aller Belüftungsventile vom Typ C betrachtet, zu denen das Ventil dieser Erfindung gehört. Damit die Dichtigkeit bei einem Minimaldruck von 500 mm Wassersäule gewährleistet ist, ist es über die völlige Abwesenheit von Oberflächendefekten sowohl bei den Dichtungen als auch bei den anderen normgemäßen, die Dichtigkeit betreffenden Komponenten hinaus unerläßlich, dass eine gute Zentrierung zwischen den Dichtelementen und den entsprechenden Sitzen gewährleistet ist. Das kann mit der vorliegenden Erfindung erzielt werden.

In der Tat kann die Führung des Ventilkegels 13 erzielt werden, indem die lichte Weite zwischen dem Innendurchmesser des Schachts 22 und den kreisförmigen Sektoren, die Teil des Ventilkegels 13 sind und entweder in Form von Rippen oder unter Reduzierung des Außendurchmessers des Führungsteils mit Ebenen gebildet sind, innerhalb bestimmter Werte gehalten wird.

Die Lösung, die umgesetzt wurde, besteht darin, den Ventilkegel 13 in mindestens zwei verschiedenen Führungsebenen in dem Schacht zu führen. Die Führungsebenen sind entlang der Längsachse des Körpers 11 axial zueinander beabstandet. Die Führungsebenen erstrecken sich vorzugsweise senkrecht zu der Längsachse. In den Führungsebenen sind Berührungsflächen zwischen dem Schacht 22 des Einsatzes 12 und der Stange 28, 32 des Ventilkegels 13 ausgebildet. Die Berührungsflächen sind vorzugsweise punktförmig. Durch die erfindungsgemäße Führung des Ventilkegels 13 wird ein Verkanten des Ventilkegels 13 in dem Schacht 22 verhindert. Dadurch liegt der Kopf 26, 30 bzw. das Kopfteil 33 des Ventilkegels 13 stets vollflächig auf dem Dichtsitz am Rand 22' des Schachts 22 auf. Es kann eine sichere und zuverlässige Abdichtung des Ventilkegels 13 gegenüber dem Schacht 22 sowohl bei hohen als auch bei niedrigen anstehenden Wasserdrücken sichergestellt werden.

Die eine (in den Figuren obere) Führungsebene wird von Kontaktpunkten zwischen der Dichtung 27, 31 des Kopfes 26, 30 des Ventilkegels 13 und einem konisch abgeschrägten Sitz an dem Rand 22' des Schachts 22 zur Realisierung einer Selbstführung gebildet. Die zweite (in den Figuren untere) Führungsebene wird von einer Führung gebildet, die an dem dem Kopf 26, 30 gegenüberliegenden Ende der Stange 28, 32 ausgebildet ist. Der Bereich zwischen den zwei Führungsebenen des Ventilkegels 13 wird dadurch vollständig frei von Führungen, wodurch das Einhalten der minimalen lichten Weite des Luftdurchlasses garantiert wird.

Die beschriebene Reduzierung des Außendurchmessers des Ventils und die Eliminierung von Hinterschneidungen, die zuvor für die Montage von zwei Dichtungen für den Einsatz 12 in dem Messingkörper 11 erforderlich waren, haben die Dimension des Ringquerschnitts zwischen dem äußeren Teil des Einsatzes 12 und dem inneren Teil des Körpers 11 des Belüftungs- und Rückschlagventils reduziert.

Wenn die zwei Radialöffnungen 24 mit rechteckigem Querschnitt, die den Schacht 22 mit dem äußeren Körper 11 verbinden, bezüglich der radialen Schlitze 18 des Körpers 11 ausgerichtet sind, werden die Vorschriften der Normen und Gesetze eingehalten.

Es wurde nun ein Einsatz 12 und ein Körper 11 mit mindestens einer Führungsnut 35 und mindestens einer in die Führungsnut 35 eingreifenden Führungsnase 34 realisiert, welche eine derartige Montage der zwei Komponenten 11, 12 ermöglichen, dass die genannten Öffnungen 24 und die Schlitze 18 nach der Montage immer fluchtend zueinander ausgerichtet sind. Dadurch kann die Querschnittsfläche der Luftansaugöffnungen bei vorgegebenen Abmessungen und Geometrien des Rohrbelüfters besonders groß ausgebildet und eine besonders kleine Ansaughöhe des Rohrbelüfters erzielt werden. Insgesamt ergibt sich dadurch ein besonders wirksames Belüftungs- und Rückschlagventil.

Die Führungsnuten 35 sind in dem Aufnahmesitz 17 des Körpers 11 ausgebildet. Die Führungsnase 34 sind an der äußeren Umfangsfläche 12'' des Einsatzes 12 ausgebildet. Es ist durch denkbar, in dem Aufnahmesitz 17 bzw. an der Umfangsfläche 12'' Führungsnuten 35 und Führungsnasen 34 abwechselnd auszubilden. Die Führungsnuten 35 und die Führungsnasen 34 sind derart relativ zueinander ausgerichtet, dass bei in den Körper 11 eingesetztem Einsatz 12 in einer vorgebbaren Drehposition des Einsatzes 12 um eine Längsachse 36 des Ventils relativ zu dem Körper 11 jeder Führungsnut 35 eine entsprechende Führungsnase 34 zugeordnet ist. Dadurch ist der Einsatz 12 in der vorgebbaren Drehposition um die Längsachse 36 relativ zu dem Körper 11 festgelegt.

Der Einsatz 12 wird vor der Montage in die vorgebbare Drehposition relativ zu dem Körper 11 gebracht und derart in den Aufnahmesitz 17 des Körpers 11 eingesetzt, dass die Führungsnasen 34 von den Führungsnuten 35 aufgenommen werden und mit den Führungsnuten 35 formschlüssig in Eingriff treten. Die Führungsnuten 35 und die Führungsnasen 34 haben in einer immaginären Schnittebene betrachtet, die senkrecht zu der Längsachse 36 verläuft, vorzugsweise eine rechteckige Querschnittsfläche. Die Erstreckung der Führungsnuten 35 und der Führungsnasen 34 in Längsrichtung verläuft vorzugsweise parallel zu der Längsachse 36 des Körpers 11, so dass der Einsatz 12 in einer Richtung parallel zu der Längsachse 36 problemlos in den Körper 11 eingesetzt werden kann.

Sämtliche Querschnitte des Wasserdurchgangs wurden vergrößert, wodurch eine beträchtliche Erhöhung des Durchflusses erzielt werden konnte. Um zu verhindern, dass in Folge übermäßiger Drücke ein Strecken der Dichtung 27, 31 bei Montage an dem Ventilkegel 13 erfolgt, wird die Länge der Stange 28, 32 des Ventilkegels 13 und die Tiefe des Schachts 22 so realisiert, dass sich das dem Kopf 26, 30 bzw. dem Kopfteil 33 gegenüberliegende Ende der Stange 28, 32 auf dem Boden des Schachts 22 abstützt. Dadurch wird das Quetschen dieser Dichtung 27, 31 begrenzt, und die Wirkung der übermäßigen Drücke oder von Rückschlägen wird nicht vollständig auf den Kopf 26, 30 bzw. den Kopfteil 33 des Ventilkegels 13 durchschlagen. Nach einer bestimmten Kompression der Dichtung 27, 31 kommt dann nämlich das untere Ende der Stange 28, 32 des Ventilkegels 13 in Auflage mit dem Boden des Schachts 22.

## Patentansprüche

1. Belüftungs- und Rückschlagventil für eine Armatur, mit einem metallischen äußeren Körper (11), der in eine Öffnung der Armatur einschraubbar ist, mit einem Einsatz (12) aus Kunststoff, der in den Körper (11) eingesetzt ist, und mit einem Ventilkegel (13), welcher dem Einsatz (12) zugeordnet ist, und bei dem:
- der Körper (11) einen axialen Aufnahmesitz (17) in Linie mit einer Öffnung (19) für den Austritt von Wasser zu einem Verbraucher sowie radiale Schlitze (18) in Höhe des Aufnahmesitzes (17) aufweist;
- der Einsatz (12) in den axialen Aufnahmesitz (17) des Körpers (11) eingepaßt ist und einen Schacht (22), longitudinale Durchgänge (23) für den Transport des Wassers zur Austrittsöffnung (19) des Körpers (11) und Radialöffnungen (24) aufweist, die von dem Schacht (22) bis zu den radialen Schlitzen (18) zum Ablassen des Wassers und/oder von Rückflußluft aus dem Ventil reichen;
- der Ventilkegel (13) dem Schacht (22) zugeordnet ist und zwischen einer Verschlußposition, in welcher eine Verbindung zwischen den in den Schacht (22) mündenden Radialöffnungen (24) und den longitudinalen Durchgängen (23) des Einsatzes (12) unterbrochen ist, und einer Öffnungsposition bei Vorhandensein eines Wasserrückflusses bewegbar ist, in welcher die longitudinalen Durchgänge (23) mit den Radialöffnungen (24) in Verbindung stehen,
**dadurch gekennzeichnet, dass** der Körper (11) und der Einsatz (12) bei in dem Körper (11) eingesetztem Einsatz (12) derart miteinander formschlüssig in Eingriff stehen, dass der Einsatz (12) in einer vorgebbaren Drehposition um eine Längsachse (36) des Körpers (11) relativ zu dem Körper (11) festgelegt ist.

2. Belüftungs- und Rückschlagventil nach Anspruch 1, **dadurch gekennzeichnet, dass** der Einsatz (12) mindestens eine Führungsnut (35) und/oder eine Führungsnase (34) aufweist, die bei in den Körper (11) eingesetztem Einsatz (12) mit mindestens einer entsprechenden Führungsnase (34) bzw. Führungsnut (35) des Körpers (11) formschlüssig in Eingriff steht und den Einsatz (12) in einer vorgebbaren Drehposition um eine Längsachse (36) relativ zu dem Körper (11) festlegt.

3. Belüftungs- und Rückschlagventil nach Anspruch 1 oder 2, **dadurch gekennzeichnet, dass** der Einsatz (12) und der Körper (11) in der vorgebbaren Drehposition derart relativ zueinander ausgerichtet sind, dass die radialen Schlitze (18) in dem Körper (11) und die Radialöffnungen (24) in dem Einsatz (12) miteinander fluchten.

4. Belüftungs- und Rückschlagventil nach Anspruch 2 oder 3, **dadurch gekennzeichnet, dass** in dem Einsatz (12) die mindestens eine Führungsnase (34) ausgebildet ist.

5. Belüftungs- und Rückschlagventil nach Anspruch 4, **dadurch gekennzeichnet, dass** die mindestens eine Führungsnase (34) an einer äußeren Umfangsfläche (12'') des Einsatzes (12) ausgebildet ist.

6. Belüftungs- und Rückschlagventil nach einem der Ansprüche 2 bis 5, **dadurch gekennzeichnet, dass** in dem Körper (11) die mindestens eine Führungsnut (35) ausgebildet ist.

7. Belüftungs- und Rückschlagventil nach Anspruch 6, **dadurch gekennzeichnet, dass** die mindestens eine Führungsnut (35) in dem Aufnahmesitz (17) des Körpers (11) ausgebildet ist.

8. Belüftungs- und Rückschlagventil nach einem der Ansprüche 2 bis 7, **dadurch gekennzeichnet, dass** die Führungsnasen (34) und die Führungsnuten (35) an dem Einsatz (12) bzw an dem Körper (11) abwechselnd ausgebildet sind.

## Claims

1. A venting and one-way valve for a fixture, having a metal outer body (11) which can be screwed into an opening of the fixture, having an insert (12) of plastic that is inserted into the body (11), and having a valve cone (13) which is associated with the insert (12), and in which:
- the body (11) has an axial receiving seat (17) in line with an opening (19) for the outflow of water to a consumer and has radial slots (18) at the level of the receiving seat (17);
- the insert (12) is fitted into the axial receiving seat (17) of the body (11) and has a chamber (22), longitudinal passages (23) for carrying the water to the outlet opening (19) of the body (11), and radial slots (24) which extend from the chamber (22) as far as the radial slots (18) for draining the water and/or return-flowing air from the valve;
- the valve cone (13) is associated with the chamber (22)and is movable between a closing position, in which a communication between the radial openings (24), discharging into the chamber (22), and the longitudinal passages (23) of the insert (12) is interrupted, and an opening position, in the presence of a return flow of water, in which the longitudinal passages (23) communicate with the radial openings (24),
**characterized in that** the body (11) and the insert (12), when the insert (12) has been inserted into the body (11), are in positive engagement with one another in such a way that the insert (12) is fixed relative to the body (11) in a predeterminable rotary position about a longitudinal axis (36) of the body (11).

2. The venting and one-way valve according to claim 1, **characterized in that** the insert (12) has at least one guide groove (35) and/or one guide lug (34), which when the insert (12) has been inserted into the body (11) is in positive engagement with at least one corresponding guide lug (34) or guide groove (35) of the body (11) and fixes the insert (12) relative to the body (11) in a predeterminable rotary position about a longitudinal axis (36).

3. The venting and one-way valve according to claim 1 or 2, **characterized in that** the insert (12) and the body (11) are oriented relative to one another in the predeterminable rotary position such that the radial slots (18) in the body (11) and the radial openings (24) in the insert (12) are aligned with one another.

4. The venting and one-way valve according to claim 2 or 3, **characterized in that** the at least one guide lug (34) is embodied in the insert (12).

5. The venting and one-way valve according to claim 4, **characterized in that** the at least one guide lug (34) is embodied on an outer circumferential face (12'') of the insert (12).

6. The venting and one-way valve according to one of claims 2 through 5, **characterized in that** the at least one guide groove (35) is embodied in the body (11).

7. The venting and one-way valve according to claim 6, **characterized in that** the at least one guide groove (35) is embodied in the receiving seat (17) of the body (11).

8. The venting and one-way valve according to one of claims 2 through 7, **characterized in that** the guide lugs (34) and the guide grooves (35) are embodied on the insert (12) and on the body (11), respectively, in alternation.

## Revendications

1. Soupape d'aération et anti-retour pour une armature, comportant un corps extérieur (11) métallique, qui peut être enfoncé dans un orifice de l'armature, un insert (12) réalisé en matière plastique, lequel insert est introduit dans le corps (11), et un cône de soupape (13) qui est associé à l'insert (12), et dans lequel :
- le corps (11) présente un siège de réception (17) axial aligné avec un orifice (19) permettant l'évacuation de l'eau vers un consommateur, ainsi que des fentes radiales (18) à hauteur du siège de réception (17) ;
- l'insert (12) est emboîté dans le siège de réception (17) axial du corps (11) et présente une cage (22), des passages longitudinaux (23) permettant de transporter l'eau vers l'orifice d'évacuation (19) du corps (11), et des orifices radiaux (24), allant de la cage (22) jusqu'aux fentes radiales (18) permettant d'évacuer l'eau et / ou l'air de reflux à partir de la soupape ;
- le cône de soupape (13) est associé à la cage (22), et peut se déplacer entre une position de fermeture, dans laquelle une liaison est établie entre les orifices radiaux (24) débouchant dans la cage (22) et les passages longitudinaux (23) de l'insert (12), et une position d'ouverture, en présence d'un reflux d'eau, dans laquelle les passages longitudinaux (23) sont reliés aux orifices radiaux (24),
**caractérisée en ce que** le corps (11) et l'insert (12), dans le cas où l'insert (12) est introduit dans le corps (11), sont en engrènement réciproque par conjugaison de forme, **en ce que** l'insert (12) est fixé, dans une position de rotation pouvant être prédéfinie, autour d'un axe longitudinal (36) du corps (11) par rapport au corps (11).

2. Soupape d'aération et anti-retour selon la revendication 1, **caractérisée en ce que** l'insert (12) présente au moins une rainure de guidage (35) et / ou un tenon de guidage (34) qui, lorsque l'insert (12) est introduit dans le corps (11), s'engrène par conjugaison de forme avec au moins un tenon de guidage (34) ou une rainure de guidage (35) correspondante du corps (11), et l'insert (12) est fixé, dans une position de rotation pouvant être prédéfinie, autour d'un axe longitudinal (36) par rapport au corps (11).

3. Soupape d'aération ou anti-retour selon l'une quelconque des revendications 1 ou 2, **caractérisée en ce que** l'insert (12) et le corps (11), dans la position de rotation pouvant être prédéfinie, peuvent être orientés l'un par rapport à l'autre de telle sorte que les fentes radiales (18) ménagées dans le corps (11) et les orifices radiaux (24) ménagés dans l'insert (12) sont alignés les uns avec les autres.

4. Soupape d'aération et anti-retour selon l'une quelconque des revendications 2 ou 3, **caractérisée en ce que**, dans l'insert (12), est au moins formé un tenon de guidage (34).

5. Soupape d'aération et anti-retour selon la revendication 4, **caractérisée en ce que** le au moins un tenon de guidage (34) est agencé sur une surface périphérique extérieure (12'') de l'insert (12).

6. Soupape d'aération et anti-retour selon l'une quelconque des revendications 2 à 5, **caractérisée en ce que**, dans le corps (11), est formée au moins une rainure de guidage (35).

7. Soupape d'aération et anti-retour selon la revendication 6, **caractérisée en ce que** la au moins une rainure de guidage (35) est agencée dans le siège de réception (17) du corps (11).

8. Soupape d'aération et anti-retour selon l'une quelconque des revendications 2 à 7, **caractérisée en ce que** les tenons de guidage (34) et les rainures de guidage (35) sont agencés de manière alternée sur l'insert (12) ou sur le corps (11).
